# EUROPEAN PATENT SPECIFICATION

(11) **EP 2 664 413 B1**
(45) Date of publication and mention of the grant of the patent: **01.10.2014**
(21) Application number: 13165900.5
(22) Date of filing: 30.04.2013
(51) Int. Cl.: B23Q 1/01, B23B 39/00, B25J 9/02

(54) **Support component of a machine tool**
Stützteil einer Werkzeugmaschine
Composant de support d`un machine outil

(30) Priority: 15.05.2012 IT BS20120084
(43) Date of publication of application: 20.11.2013
(73) Proprietor: INNSE-BERARDI S.p.A., 25127 Brescia (IT)
(72) Inventor: Camozzi Attilio, 25127 Brescia (IT)
(74) Representative: Pulieri, Gianluca Antonio

(56) References cited:
- WO-A1-2012/042029
- DE-A1- 19 934 159
- DE-A1-102006 013 766
- GB-A- 992 650
- US-A- 4 826 127
- US-A- 5 099 820

## Description

The present invention relates to a machine tool for performing mechanical processing, and in particular a machine tool of large dimensions, for example of the "horizontal" type, such as for example a boring machine, or of the "vertical" type such as for example a gantry milling machine.

A support component of a machine tool according to the preamble of claim 1 is known for example from US-A-5099820.

In the machine tool sector, and in particular in that of machine tools of large dimensions, the need is particularly felt to perform mechanical processing with very strict tolerances, despite the considerable dimensions of the pieces being processed and the considerable forces at play. Often, in fact, such processing regards mechanical parts for the nuclear industry (tanks, heat exchangers) or for the engine industry (bases of marine engines).

To ensure such strict machine tolerances, the structural components of the machine need to be particularly rigid, to appropriately oppose the elevated forces developing during processing which could otherwise produce a deformation of the machine component, with a consequent reduction of processing accuracy.

Such purpose is achieved by a support component for a machine tool made according to claim 1.

The characteristics and advantages of the support component according to the present invention will be evident from the description given below, made by way of a non-limiting example, according to the appended drawings, wherein:

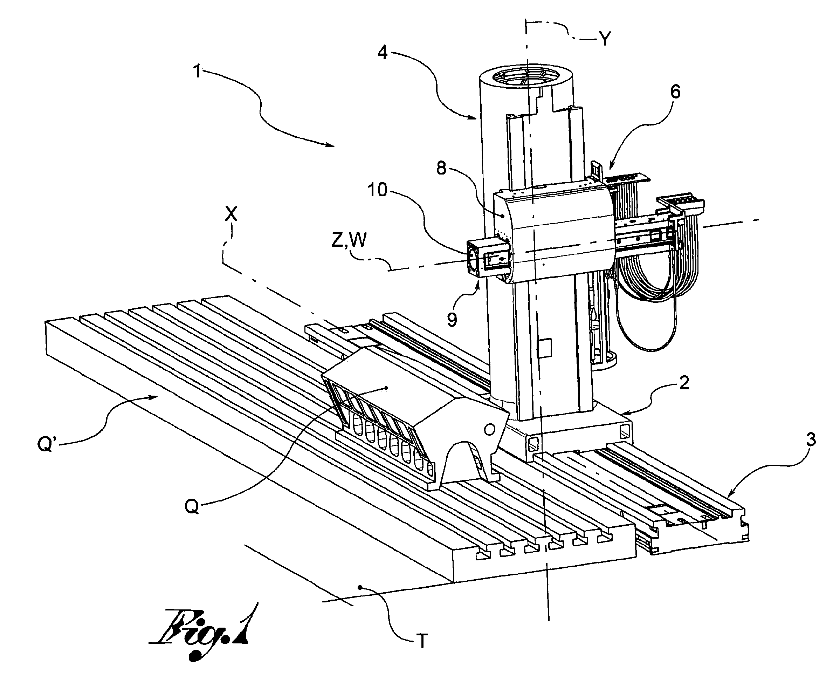

- figure 1 shows a machine tool, and in particular a boring machine, comprising a support component according to the present invention;

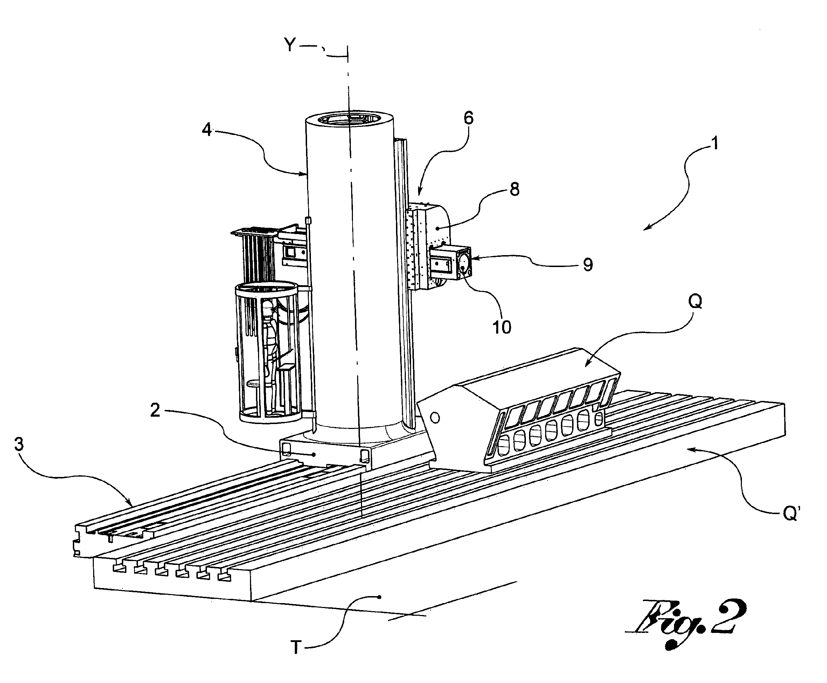

- figure 2 shows the boring machine in figure 1, from a different viewpoint;

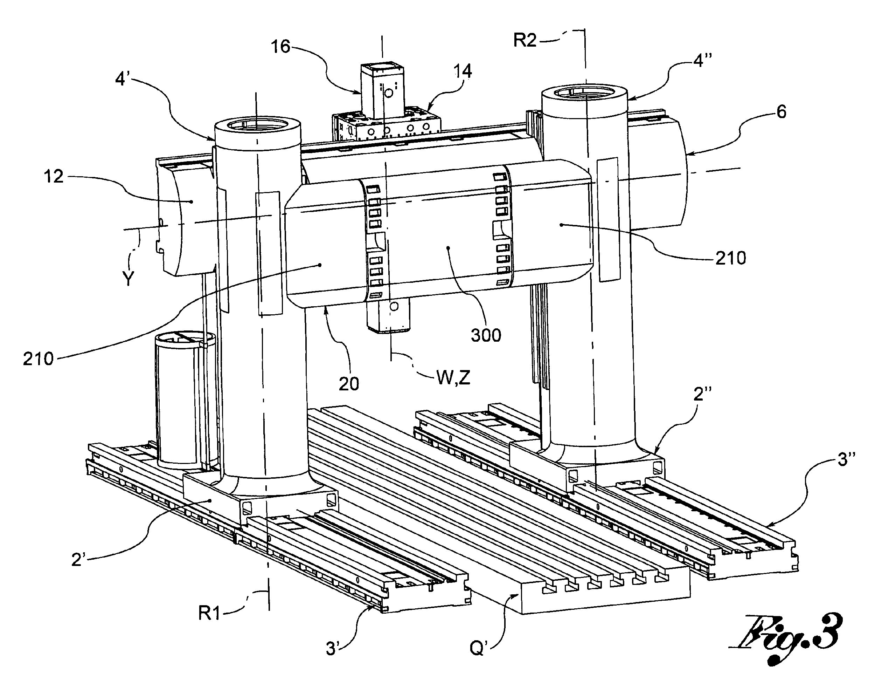

- figure 3 shows a further machine tool, and in particular a gantry milling machine, comprising the support component according to the present invention;

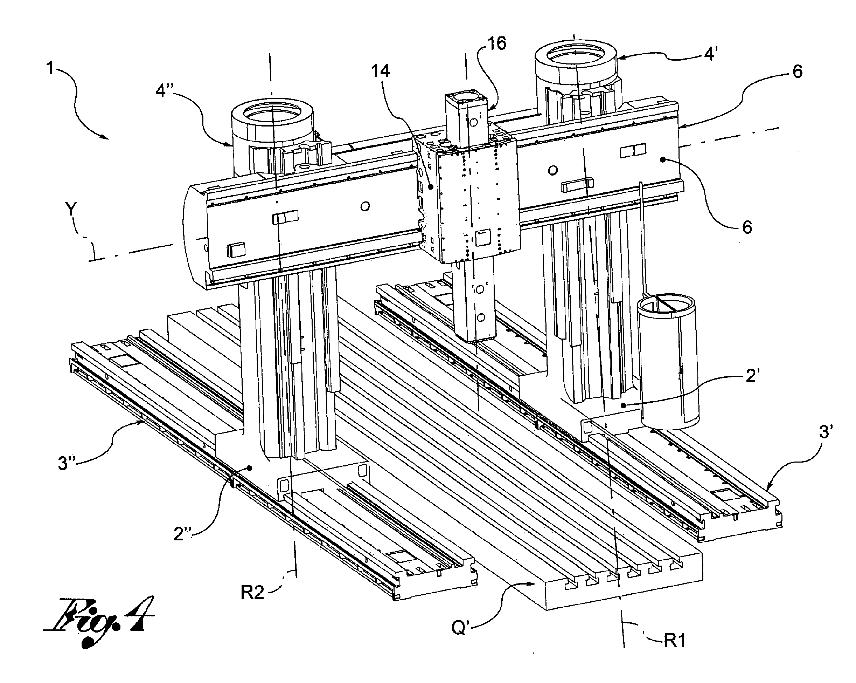

- figure 4 shows the gantry milling machine in figure 3, from a different viewpoint;
- figure 5 shows the support component according to the present invention , according to one embodiment;

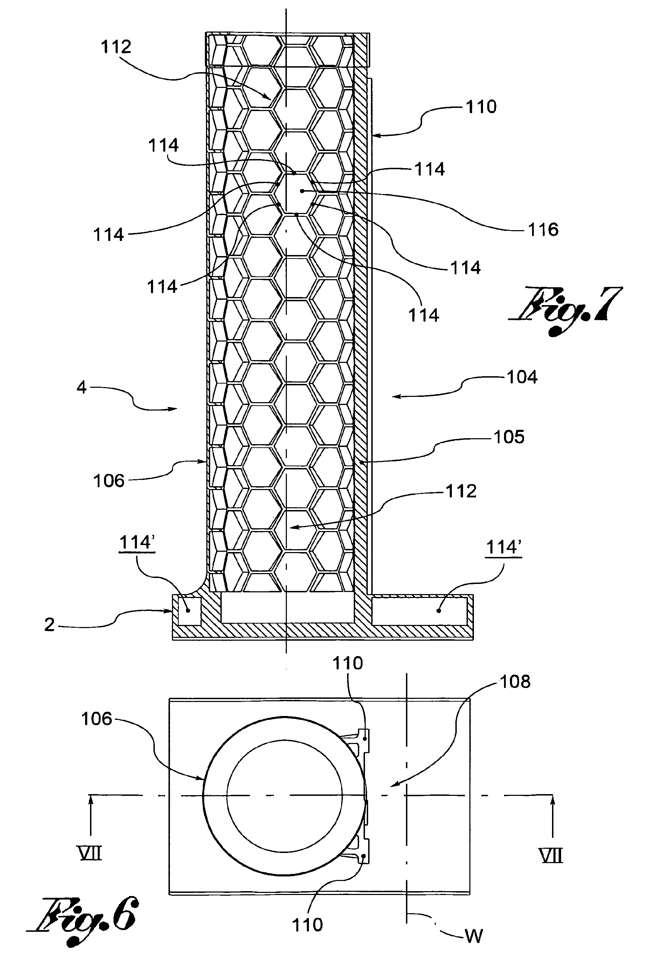

- figure 6 shows the support component in figure 5, in a plan view;
- figure 7 shows the support component in figure 5, in a cross-section view, according to the cross-section plane VII-VII in figure 6;
- figure 8 shows the support component according to the present invention, according to a further embodiment;
- figure 9 shows the support component in figure 8, in a plan view;
- figure 10 shows the support component in figure 8, in a cross-section view, according to the cross-section plane X-X in figure 9;
- figure 11 shows the support component according to the present invention, according to yet a further embodiment.

According to the invention, a boring machine 1 comprises a base 2, resting on a bench 3, in turn, resting on a ground plane T.

Above the base 2 a vertical upright 4 extends along a main axis Y, substantially orthogonal to the ground plane T.

The base 2, and thus the upright placed on it, is translatable along the bench 3, for its positioning as needed.

The base 2 is suitable for supporting the upright in a stable manner, including in translation, avoiding tipping or oscillations. Preferably, the projection of the upright along the main axis Y on the base is contained inside said base.

The machine 1 comprises a mobile group 6 supported by the upright 4; the mobile group 6 comprises a carriage 8, sliding upon command along the upright 4, so as to position itself at a desired height along the main axis Y, and a head 9, supported by the carriage 8, translating along the head axis W orthogonal to the main axis Y, that is to say substantially horizontal.

In addition, the mobile group 6 comprises at least one mandrel 10, supported by the head 9, rotatable around a working axis Z, also substantially perpendicular to the main axis Y, and preferably also translatable along said working axis Z.

Perpendicular to the main axis Y and to the working axis Z a longitudinal axis X is defined.

The piece to be processed Q is positioned opposite the mandrel 10, for example positioned on a support Q' resting on the ground plane T.

According to a further embodiment of the present invention, the machine 1 is a gantry milling machine.

According to such variation, the machine 1 comprises two uprights 4', 4", extending along a respective main axis R1, R2, resting on respective bases 2', 2" positioned on benches 3', 3" resting on a ground plane T.

The two uprights 4', 4" are distanced along a transversal axis Y and rigidly joined to each other by means of a fixed cross-member 20.

The bases 2', 2" and thus the relative uprights 4', 4'' are translatable along the respective benches 3' 3'' for positioning as needed.

In addition, the machine 1 comprises a mobile group 6, comprising a mobile cross-member 12 which extends along said transversal axis Y.

At its ends, the cross-member 12 is engaged with the uprights 4', 4" and is translatable along the vertical axes R1,R2.

The mobile group 6 further comprises a carriage 14 slidable along the mobile cross-member 12, a head 16, supported by the carriage 14 and translatable along a head axis W, and a mandrel, supported by the head 16, rotatable around a working axis Z, substantially parallel to the vertical axes R1, R2 and preferably translatable along said working axis Z.

The piece to be worked is positioned in the span formed by the uprights 4', 4" and by the mobile cross-member 12, for example positioned on a support Q', resting on the ground plane T,

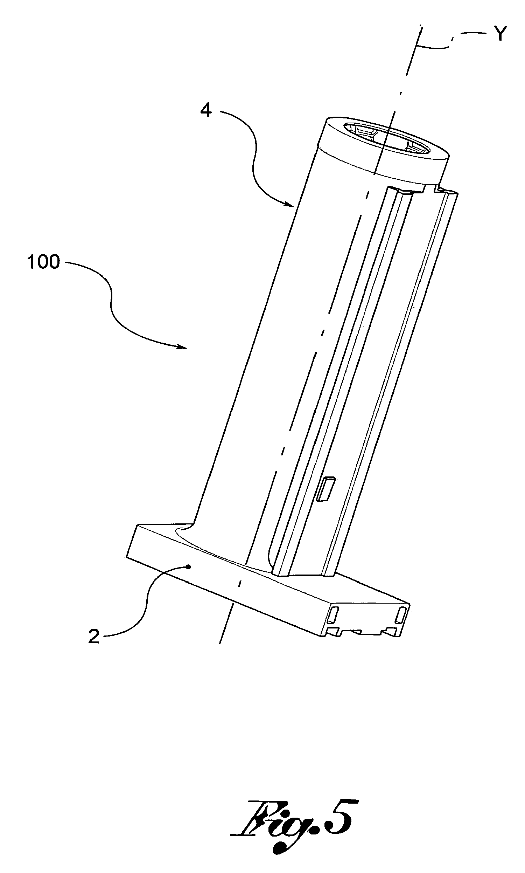

A support component 100 for the boring machine (figure 5), comprises the base 2 and the upright 4, internally hollow, positioned above the base.

The component 100 is made in a single piece, preferably by casting, for example in cast iron.

In other words, the base 2 and the upright 4 constitute a single piece, for example made by casting.

The upright 4 comprises a main body 104, resting on the base 2, consisting an annular wall 105 delimited externally by an outer surface 106,which extends along the main axis Y, from the base 2 to the free summit; the outer surface 106 is at least partially circular cylindrical.

The upright 4 comprises in addition a shoulder 108, projecting from the main body 104, which forms the guide for the mobile group 6.

In particular, the shoulder 108 comprises two rails 110 which extend along the main axis Y, projecting from the outer surface 106 of the annular wall 105, distanced along the head axis W and forming a flat guide.

Internally, the annular wall 105 of the upright 4 comprises a plurality of cells 112, peripherally delimited by projecting septums 114, which form a honeycomb reinforcement structure.

In particular, said annular wall comprises a plurality of septums 114, positioned and joined to each other so as to form polygonal cells, for example hexagonal, peripherally closed, which delimit empty inner compartments 116.

Preferably, the honeycomb reinforcement structure is homogeneous over the annular wall 105, that is to say the cells are evenly distributed over said annular wall 105.

Th e base 2 of the component 100 is preferably quadrangular in shape, for example having a rectangular layout, with the short side positioned opposite the shoulder 108.

Preferably, the base 2 provides for at least one internal compartment 115 for lightening.

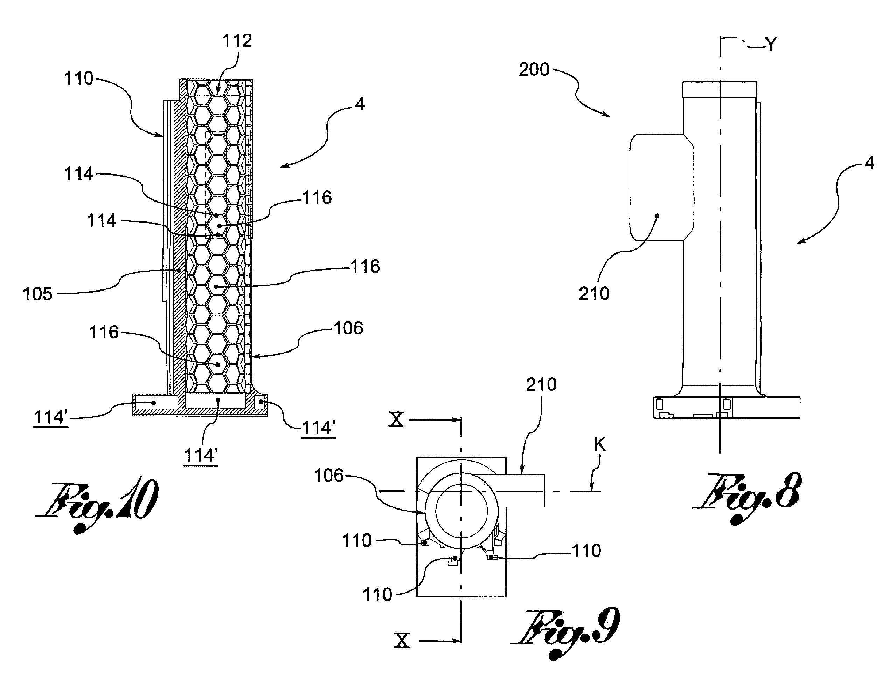

A support component 200 for the milling machine (figure 8), having structural and functional characteristics similar to those illustrated above for the component 100 for the boring machine.

In particular, the support component 200 for the milling machine comprises the base 2', 2" and the upright 4', 4" internally hollow, positioned above the base.

In addition, preferably, the upright 4', 4" of the component 200 comprises a portion of cross-member 210, projecting from the main body 104 of the upright 4', 4''.

The portion of cross-member 210 is also made in one piece with the main body 104 of the upright 4', 4" and the base 2', 2".

Preferably, the portion of cross-member 210 has a box-like structure, internally hollow, and extends in a cross-member direction K, parallel to a diametrical direction of the main body 104 of the upright 4', 4".

The fixed cross-member 20 of the milling machine comprises the portion of cross-member 210 of a first upright 4', the portion of cross-member 210 of a second upright 4" and at least one intermediate spacer 300, positioned between the ends of said cross-member portions 210 and connected thereto.

The shoulder 108 of the component 200, projecting from the main body 104, forms the guide for the mobile cross-member 12 of the mobile group 6 of the milling machine.

In particular, the shoulder 108 comprises three rails 110 which extend along the main axis Y, projecting from the outer surface 106 of the annular wall 105, angularly distanced and forming a flat guide for the mobile cross-member 12 of the mobile group 6.

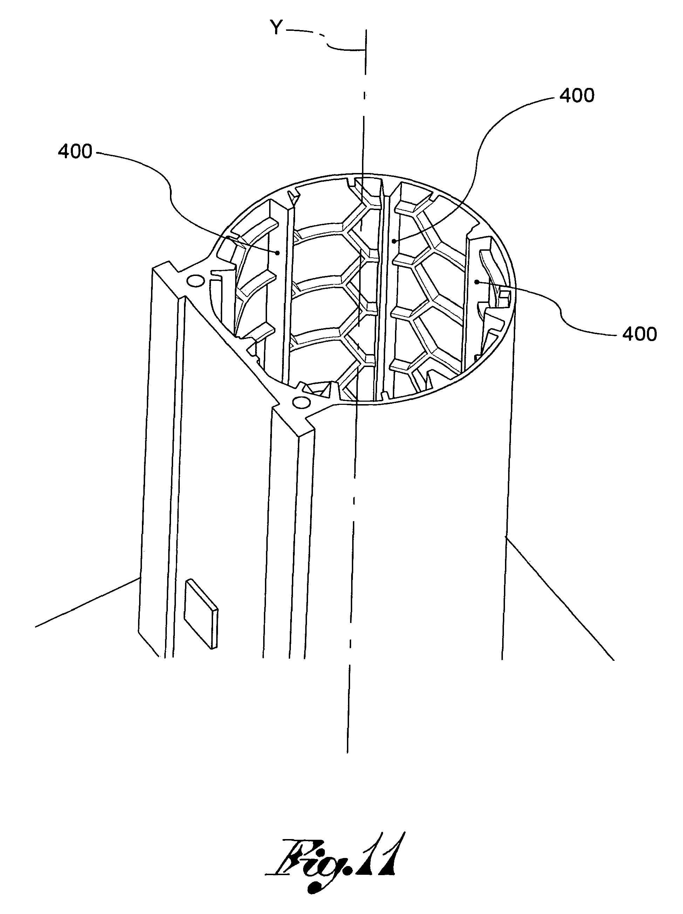

According to yet a further embodiment, the reinforcement structure of the support component according to the present invention comprises at least one additional rib, preferably a plurality of additional ribs 400, each parallel to the main axis Y, projecting inwards from the annular wall 105 (figure 11).

According to yet a further embodiment, the reinforcement structure of the support component according to the present invention comprises at least one annular rib, preferably a plurality of annular ribs, parallel to each other and lying on planes orthogonal to the main axis, projecting inwards from the annular wall 105 (not shown).

Innovatively, the support component according to the present invention makes it possible to satisfy the precision requirements of processing spoken of, inasmuch as particularly rigid.

In addition, advantageously, the component according to the invention is itself made with strict dimensional tolerances, by not having separate components to be joined to each other , as happens in the prior art.

According to a further advantageous aspect, the structure of the component is without stress fields and localised deformation, by not having separate components to be joined by welding, as happens in the prior art.

Advantageously, in addition, the component according to the invention has reduced production costs and times compared to analogous components of the prior art, made by mechanical tool processing.

Advantageously, in addition, the component according to the invention has a lower weight than the analogous components of the prior art.

According to a further advantageous aspect, the component according to the invention has a lower cost for the raw material compared to that of analogous components of the prior art.

It is clear that a person skilled in the art may make modifications to the support component described above so as to satisfy contingent requirements.

For example, according to an embodiment variation, the reinforcement structure provides for a plurality of cells in the shape of an irregular polygon or a polygon with some arched sides or having a circumferential shape.

According to a further embodiment, the distribution of the cells on the inner surface of the annular wall is not homogeneous, but is for example denser in the zones subject to greater working loads.

Such variants are also contained within the sphere of protection as defined by the following claims.

## Claims

1. Support component (100,200) of a machine tool (1) suitable for supporting a mobile processing group (6), comprising at least a portion of an upright (4,4',4") extending long a main axis (Y) and a base (2,2',2") suitable for the stable support of the upright, wherein the upright (4) comprises a main body (104), resting on the base (2), comprising an annular wall (105) delimited externally by an outer surface (106), and the portion of upright and the base are made in one piece said support component being **characterized in that** the annular wall (105), internally, comprises a plurality of cells (112) peripherally delimited by projecting septums (114) which delimit empty compartments (116).

2. Component according to claim 1, wherein the component is made in a single piece by casting.

3. Component according to claim 1 or 2, wherein the component is made in a single piece in cast iron.

4. Component according to any of the previous claims, wherein said cells form a honeycomb shape reinforcement structure.

5. Component according to any of the previous claims, wherein the cells are evenly distributed over said annular wall (105).

6. Component according to any of the previous claims, wherein the outer surface (106) of the annular wall (105) is at least partially circular cylindrical.

7. Component according to any of the previous claims, wherein the upright (4,4',4") further comprises a shoulder (108) which forms the guide for the mobile group (6).

8. Component according to any of the previous claims, wherein the projection of the upright on the base, along said main axis (Y), is contained inside the base (2, 2', 2").

9. Component according to any of the previous claims, wherein the base (2) has at least one internal compartment (114) for lightening.

10. Component (200) according to any of the previous claims, wherein the upright (4',4") comprises a projecting portion of cross-member (210) suitable for connection with a spacer (300).

11. Component according to claim 10, wherein the portion of cross-member (210) has a box-like structure.

12. Component according to claim 7 and 10, wherein, a diametrical direction of the upright (4', 4") being defined, said portion of cross-member finds itself opposite said shoulder, in a diametrical direction.

13. Component according to any of the previous claims, comprising the entire upright (4, 4', 4") made in one piece with the base.

14. Boring machine (1) comprising:
- a bench (3);
- a support component (100) made according to any of the claims from 1 to 9 or 13, supported by said bench and translatable upon command along it;
- a mobile group (6)translatable upon command along the upright (4) of the support component (100), comprising a carriage (8), coupled to the upright (4), a head (9), supported by the carriage (8), translatable along a head axis (W) orthogonal to the main axis (Y), and a mandrel (10), supported by the head (9), rotatable around a work axis (Z).

15. Gantry milling machine (1) comprising:
- two benches (3, 3") distanced along a cross-member axis (K);
- two support components (200) made according to any of the claims from 10 to 12 or 13, supported by said benches and translatable upon command along them;
- at least one spacer (300) connected to the two portions of cross-member (210) of the two support components (200);
- a mobile group (6), comprising a mobile cross-member (12), engaged with the uprights (4',4") and translatable upon command along said uprights, comprising a carriage (14), translatable upon command along the mobile cross-member (12), a head (16), supported by the carriage (14) and translatable upon command along it, and a mandrel, supported by the head (16), rotatable around a work axis (Z).

16. Production method of a support component of a machine tool according to anyone of the claims from 1 to 13, comprising the step of making the portion of upright and the base of said support component in a single piece by casting.

## Patentansprüche

1. Stützbauteil (100, 200) einer Werkzeugmaschine (1), das zum Abstützen einer beweglichen Bearbeitungsgruppe (6) geeignet ist, umfassend wenigstens einen Abschnitt eines Säulenständers (4, 4', 4''), der sich entlang einer Hauptachse (Y) erstreckt, und eine Basis (2, 2', 2''), die für die stabile Abstützung des Säulenständers geeignet ist, wobei der Säulenständer (4) einen Hauptkörper (104), der auf der Basis (2) steht und der eine Ringwand (105) umfasst, die außen durch eine Außenfläche (106) begrenzt ist, umfasst, und wobei der Abschnitt des Säulenständers und die Basis einstückig ausgebildet sind,
wobei das Stützbauteil **dadurch gekennzeichnet ist, dass** die Ringwand (105) innen eine Mehrzahl von Zellen (112) umfasst, die durch vorragende Trennwände (114) begrenzt sind, die leere Kammern (116) begrenzen.

2. Bauteil gemäß Anspruch 1, wobei das Bauteil einstückig durch Gießen hergestellt ist.

3. Bauteil gemäß Anspruch 1 oder 2, wobei das Bauteil einstückig aus Gusseisen hergestellt ist.

4. Bauteil gemäß einem der vorangehenden Ansprüche,
wobei die Zellen eine bienenwabenförmige Verstärkungsstruktur bilden.

5. Bauteil gemäß einem der vorangehenden Ansprüche,
wobei die Zellen entlang der Ringwand (105) gleichmäßig verteilt sind.

6. Bauteil gemäß einem der vorangehenden Ansprüche,
wobei die Außenfläche (106) der Ringwand (105) wenigstens teilweise kreiszylindrisch ist.

7. Bauteil gemäß einem der vorangehenden Ansprüche,
wobei der Säulenständer (4, 4', 4'') ferner eine Schulter (108) umfasst, welche die Führung für die bewegliche Gruppe (6) bildet.

8. Bauteil gemäß einem der vorangehenden Ansprüche,
wobei die Projektion des Säulenständers auf der Basis in Richtung der Hauptachse (Y) in die Basis (2, 2', 2") fällt.

9. Bauteil gemäß einem der vorangehenden Ansprüche, wobei die Basis (2) wenigstens eine innere Kammer (114) zur Beleuchtung aufweist.

10. Bauteil (200) gemäß einem der vorangehenden Ansprüche, wobei der Säulenständer (4', 4'') einen vorstehenden Querstrebenabschnitt (210) umfasst, der zur Verbindung mit einem Abstandshalter (300) geeignet ist.

11. Bauteil gemäß Anspruch 10, wobei der Querstrebenabschnitt (210) einen kastenförmigen Aufbau aufweist.

12. Bauteil gemäß Anspruch 7 und 10, wobei durch die Ständersäule (4', 4'') eine diametrale Richtung definiert ist und der Querstrebenabschnitt der Schulter in einer diametralen Richtung gegenüberliegt.

13. Bauteil gemäß einem der vorangehenden Ansprüche,
umfassend den gesamten Säulenständer (4, 4', 4''), der einstückig mit der Basis hergestellt ist.

14. Bohrmaschine (1) umfassend:
- einen Tisch (3),
- ein Stützbauteil (100), das gemäß einem der Ansprüche 1 bis 9 oder 13 hergestellt ist, und auf dem Tisch abgestützt und auf Befehl entlang desselben bewegbar ist,
- eine bewegliche Gruppe (6), die auf Befehl entlang des Säulenständers (4) des Stützbauteils (100) beweglich ist und die einen Schlitten (8), der mit dem Säulenständer (4) verbunden ist, einen Kopf (9), der von dem Schlitten (8) gestützt wird und der entlang einer Kopfachse (W) orthogonal zu der Hauptachse (Y) beweglich ist, und eine Spindel (10), die von dem Kopf (9) gestützt ist und die um eine Arbeitsachse (Z) drehbar ist, umfasst.

15. Portalfräsmaschine (1) umfassend:
- zwei Tische (3, 3''), die entlang einer Querstrebenachse (K) beabstandet angeordnet sind,
- zwei Stützbauteile (200), die gemäß einem der Ansprüche 10 bis 12 oder 13 hergestellt und durch die Tische abgestützt und auf Befehl entlang derselben beweglich sind,
- wenigstens einen Abstandshalter (300), der mit den zwei Querstrebenabschnitten (210) der zwei Stützbauteile (200) verbunden ist,
- eine bewegliche Gruppe (6), die eine bewegliche Querstrebe (12), die mit den Säulenständern (4', 4'') in Eingriff ist und auf Befehl entlang der Säulen beweglich ist und einen Schlitten (14), der auf Befehl entlang der beweglichen Querstrebe (12) beweglich ist, einen Kopf (16), der durch den Schlitten (14) gestützt und entlang desselben auf Befehl beweglich ist, und eine Spindel, die durch den Kopf (16) gestützt und um eine Arbeitsachse (Z) drehbar ist, umfasst.

16. Herstellungsverfahren für ein Stützbauteil einer Werkzeugmaschine gemäß einem der Ansprüche 1 bis 13, umfassend den Schritt der einstückigen Herstellung des Abschnitts des Säulenständers mit der Basis des Stützbauteils durch Gießen.

## Revendications

1. Composant de support (100, 200) d'une machine-outil (1) adapté pour supporter un groupe de traitement mobile (6), comprenant au moins une partie d'un montant (4, 4', 4'') s'étendant le long d'un axe principal (Y) et une base (2, 2', 2'') adaptée pour le support stable du montant, dans lequel le montant (4) comprend un corps principal (104), reposant sur la base (2), comprenant une paroi annulaire (105) délimitée extérieurement par une surface externe (106), et la partie du montant et la base sont réalisées d'une seule pièce
ledit composant de support étant **caractérisé en ce que** la paroi annulaire (105), intérieurement, comprend une pluralité de cellules (112) délimitée périphériquement par des cloisons saillantes (114) qui délimitent des compartiments vides (116).

2. Composant selon la revendication 1, dans lequel le composant est réalisé d'une seule pièce par moulage.

3. Composant selon la revendication 1 ou 2, dans lequel le composant est réalisé d'une seule pièce en fonte.

4. Composant selon l'une quelconque des revendications précédentes, dans lequel lesdites cellules forment une structure de renforcement en forme de nid-d'abeilles.

5. Composant selon l'une quelconque des revendications précédentes, dans lequel les cellules sont réparties régulièrement sur ladite paroi annulaire (105).

6. Composant selon l'une quelconque des revendications précédentes, dans lequel la surface externe (106) de la paroi annulaire (105) est au moins partiellement circulaire cylindrique.

7. Composant selon l'une quelconque des revendications précédentes, dans lequel le montant (4, 4', 4") comprend en outre un épaulement (108) qui forme le guide pour le groupe mobile (6).

8. Composant selon l'une quelconque des revendications précédentes, dans lequel la saillie du montant sur la base, le long dudit axe principal (Y), est contenue à l'intérieur de la base (2, 2', 2'').

9. Composant selon l'une quelconque des revendications précédentes, dans lequel la base (2) comporte au moins un compartiment interne (114) pour l'éclairage.

10. Composant (200) selon l'une quelconque des revendications précédentes, dans lequel le montant (4', 4'') comprend une partie saillante de traverse (210) adaptée pour un raccordement avec une entretoise (300).

11. Composant selon la revendication 10, dans lequel la partie de traverse (210) a une structure en forme de boîte.

12. Composant selon les revendications 7 et 10, dans lequel une direction diamétrale du montant (4', 4'') étant définie, ladite partie de traverse se trouve opposée audit épaulement, dans une direction diamétrale.

13. Composant selon l'une quelconque des revendications précédentes, comprenant le montant entier (4, 4', 4'') réalisé d'une seule pièce avec la base.

14. Aléseuse (1) comprenant :
- un banc (3) ;
- un composant de support (100) réalisé selon l'une quelconque des revendications 1 à 9 ou 13, supporté par ledit banc et translatable sur commande le long de celui-ci ;
- un groupe mobile (6) translatable sur commande le long du montant (4) du composant de support (100), comprenant un chariot (8), accouplé au montant (4), une tête (9), supportée par le chariot (8), translatable le long d'un axe de tête (W) orthogonal à l'axe principal (Y), et un mandrin (10), supporté par la tête (9), rotatif autour d'un axe de travail (Z).

15. Fraiseuse à portique type Gantry (1) comprenant :
- deux bancs (3, 3'') à distance le long d'un axe de traverse (K) ;
- deux composants de support (200) réalisés selon l'une quelconque des revendications 10 à 12 ou 13, supportés par lesdits bancs et translatables sur commande le long de ceux-ci ;
- au moins une entretoise (300) raccordée aux deux parties de traverse (210) des deux composants de support (200) ;
- un groupe mobile (6), comprenant une traverse mobile (12), enclenché avec les montants (4', 4") et translatable sur commande le long desdits montants, comprenant un chariot (14), translatable sur commande le long de la traverse mobile (12), une tête (16) supportée par le chariot (14) et translatable sur commande le long de celui-ci, et un mandrin, supporté par la tête (16), rotatif autour d'un axe de travail (Z).

16. Méthode de production d'un composant de support d'une machine-outil selon l'une quelconque des revendications 1 à 13, comprenant l'étape de réalisation de la partie de montant et de la base dudit composant de support en une seule pièce par moulage.
